Europäisches Patentamt

European Patent Office

Office européen des brevets

(19)

(11) Publication number: **0 332 557**
**A2**

(12) **EUROPEAN PATENT APPLICATION**

(21) Application number: **89480010.1**

(22) Date of filing: **17.01.89**

(51) Int. Cl.⁴: **G 06 F 15/20**

(30) Priority: **08.03.88 US 165317**

(43) Date of publication of application:
**13.09.89 Bulletin 89/37**

(84) Designated Contracting States: **DE ES FR GB IT**

(71) Applicant: **International Business Machines Corporation**
**Old Orchard Road**
**Armonk, N.Y. 10504 (US)**

(72) Inventor: **Barker, Barbara Ann**
**2800 Carmel Drive**
**Round Rock Texas 78664 (US)**

**Edel, Thomas R.**
**9410 Topridge Drive**
**Austin Texas 78750 (US)**

**Stark, Jeffrey A.**
**2905 Valleyview Drive**
**Grapevine Texas 76051 (US)**

(74) Representative: **Tubiana, Max**
**Compagnie IBM France Département de Propriété**
**Intellectuelle**
**F-06610 La Gaude (FR)**

(54) **Separation of document layout and data elements.**

(57) Separate storage of layout and data components composed on a computer system permits editing of either component independent of the other. Normally, format controls are stored with data, and to edit either requires calling both. By separately storing and retrieving layout and data components, considerable flexibility is achieved in the creation, processing and assembly of those components in various combinations into one or more documents.

EP 0 332 557 A2

**Description**

## SEPARATION OF DOCUMENT LAYOUT AND DATA ELEMENTS

## BACKGROUND OF THE INVENTION

### Field of the Invention

The present invention generally relates to the preparation of documents on computers or data processing systems and, more particularly, to the independent development and processing of document layout and data elements. The invention allows the assembly of those elements in a document by mixing and matching in various combinations to comprise the element content of one or more documents with the freedom to have different mixtures of the same copies of elements in different documents.

### Description of the Prior Art

In traditional revisable document architecture, layout and data elements are bound together when a revisable document is created. Because of the unitary data structure of a revisable document created by the traditional revisable document architecture, the data structure is both complex and difficult to edit. A great deal of effort is now being expended in developing and improving document publishing application programs. The trend is to provide publishing programs which are capable of supporting mixed objects, such as text, tables, graphics, images and so forth. Each of these objects, in turn, require different formatting commands which are both characteristic of the object type and specific to the object. The data stream of a mixed object revisable document therefore must necessarily become more complex to support the mixed objects when the revisable document is created by the traditional architecture. As the data stream becomes more complex, editing becomes more difficult since both layout and data elements must be searched even though only one or the other of these elements is to be edited.

## SUMMARY OF THE INVENTION

It is therefore an object of the present invention to provide a revisable document architecture which allows independent creation, processing and storage of layout, logical and data elements, as well as independent assembly of those elements in various combinations into one or more documents.

It is another object of the invention to provide a revisable document architecture which permits the creation of a new layout or the modification and/or use of an existing layout independent of the existence and content of data elements.

It is a further object of the invention to provide a revisable document architecture which permits the creation of a new data element or the modification and/or use of an existing data element independent of the existence and content of layout elements.

According to the invention, the revisable document architecture simplifies the revisable document data stream by generating a hierarchical library of elements which define a document. The library of elements are arranged in a generally nested structure of, for example, document, page, object, and style elements. These elements are independently stored and can be combined in a manner which produces a document with predictable style and data format results. Both layout and data elements can reference other layout and data elements, respectively, so that replication of elements can be avoided when they are used repeatedly with and between documents. The access to and distribution of information can be limited to what is required to reduce access time and resource utilization. In particular, the independence of the elements from each other and from the document definition offers many opportunities to reduce the number of bits that are sent over a network to electronically transport a document among geographically distributed nodes. By the same token, the independence of the elements greatly enhances the flexibility of editing the revisable document.

An example of a document which contains layout, logical and data elements is given in the following list :

## DOCUMENT A

Presentation Spaces: As defined by Layout Element B
Logical Elements: As defined by Logical Element C
Data Element: As defined by Data Element D
An example of a layout element is given in the following list :

## LAYOUT ELEMENT B

Medium Space A: Contains Page Space E
Page Space E: Contains Area Spaces F and G
Area Space F
Area Space G
Map: Data Object I to Area Space F
Map: Data object J to Area Space G
An example of a layout element is given in the following list :

## LOGICAL ELEMENT C

Paragraph H: Appears in Area Space F
An example of a data element is given in the following list:

## DATA ELEMENT D

Data Object I: Data for instance of Paragraph H
The function of the invention has six parts which define :

1) layouts for several distinct presentation spaces such as medium, page, and area;

2) objects for several different data types, such as text, image, graphics, etc., and the local format description for the data in a particular object;

3) the hierarchical relationship between presentation spaces, i.e., areas to pages and pages to mediums;

4) the relationship between areas and objects which determines what data appears in a presentation space;

5) the relationship between logical elements and data elements which determines the data contained within a logical element, e.g., the text that is contained within a paragraph; and

6) the relationship between logical elements and presentation spaces, e.g., a level 1 section starts a new page.

## BRIEF DESCRIPTION OF THE DRAWINGS

The foregoing and other objects, aspects and advantages of the invention will be better understood from the following detailed description of a preferred embodiment of the invention with reference to the drawings, in which :

Figure 1 is a block diagram illustrating a library of elements and the organization of library elements into a document;

Figure 2 is a block diagram illustrating the setting of current state values when traversing the same state;

Figure 3 is a block diagram illustrating the setting of current state values when traversing state hierarchy, for the case where the traversal is from superior to subordinate to superior states, resolving a match in favor of subordinate state values;

Figure 4 is a block diagram illustrating the setting of current state values when traversing state hierarchy, for the case where the traversal is from superior to subordinate to superior states, resolving a match in favor of superior state values;

Figure 5 is a block diagram illustrating the setting of current state values by passing superior state values or referenced style values across a state boundary;

Figure 6 is a block diagram illustrating the setting of current state values by passing subordinate state values across a state boundary;

Figure 7 is a flow chart illustrating the logic of a computer program implementing the invention;

Figure 8 is a block diagram illustrating a processing session using a first application to create a mixed object data stream;

Figure 9 is a block diagram illustrating a processing session using a different application to process the data stream;

Figure 10 is a block diagram illustrating transmission of the data stream between two different user devices and processes in a network;

Figure 11 is a block diagram illustrating the beginning of a tailoring or customization process of the data stream by a receiving device and process in the network;

Figure 12 is a block diagram illustrating a continuation of the tailoring or customization process begun in Figure 11; and

Figure 13 is a block diagram illustrating the tailored or customized data stream being used by a user device to direct processing of another data stream being received by the user device or process in the network.

## DETAILED DESCRIPTION OF A PREFERRED EMBODIMENT OF THE INVENTION

According to the invention, the environment values that determine the appearance of a document's page images and data on those page images may be stored and retrieved for editing independently of document objects that establish document state, page objects that establish page state, and data objects which establish object state and provide data. The environment values are grouped into entities called styles and can be mixed and matched arbitrarily in any style. The content of a document can be any number of pages and styles mixed in any order.

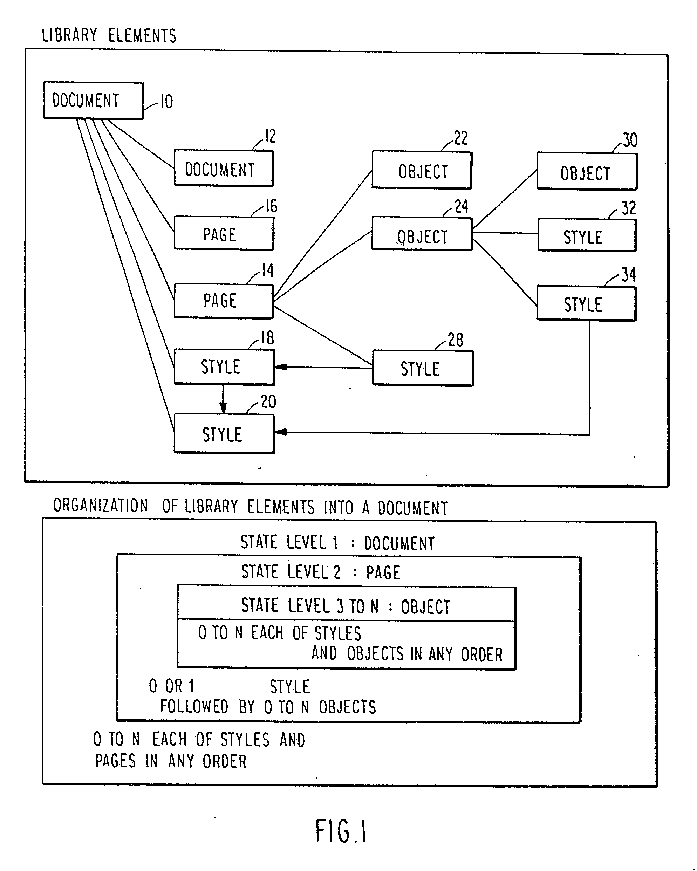

Referring now to the drawings, and more particularly to Figure 1, there is shown in block diagram form the organization of a library of elements which define a document 10. Document 10 might, for example, reference another document 12, pages 14 and 16, and style elements 18 and 20. The document is defined as state level 1 and page 14, for example, is defined as state level 2. Page 14 might, for example, reference objects 22 and 24 and style 28. Object 24 might, for example, reference object 30 and styles 32 and 34, in the illustrated hierarchy. Object 24, for example, is defined as state level 3, and so forth. The tree structure of this hierarchical nesting of the elements is clearly evident from the illustration.

The pages and styles can be in line in the document as in document 12 in Figure 1. The pages and styles, as well as other documents can be stored as independent objects in the library and referenced from a document as in document 10 in Figure 1. In line and referenced documents, pages, and styles can be mixed in any order and can be used any number of times. In Figure 1, document 10 references document 12, pages 14 and 16, and style 18. Other documents may reference any number of the same pages and styles referenced by document 10. A document can reference the same document, page, or style any number of times. The referenced document, page, and style content of a document can be separately retrieved for editing. A document may contain any mix of in line and referenced pages and styles.

The content of a page can also be in line or referenced. In Figure 1, the content of page 16 is in line while the content of page 14 is referenced and comprises objects 22 and 24, and style 28. Everything that was stated above for a document applies to a page except that a page can not contain in line or reference a document or another page and it can not activate style values that apply only to a document.

The content of an object can also be in line or referenced. In Figure 1, the content of object 22 is in line while the content of object 24 is referenced and comprises object 30 and styles 32 and 34. Everything that was stated above for a page applies to an object except that an object can not activate style values that apply to documents or pages. Also, the hierarchy of object referencing is unrestricted; that is, object 30 could in turn reference another object and so forth. Endless loops are controlled by limiting object nesting depth.

Styles may also reference each other. In Figure 1, style 18 references style 20, style 28 references style 18, and style 34 references style 20. The reference can cause the referenced style element values to be used when both styles compete for setting the same style value, or can cause the referencing style element values to be used to set current state values. All non-competing values from referenced and referencing styles are used as current state values provided the value is valid for the current state. Only certain styles can be referenced which are those styles that exist in document state. Therefore, in Figure 1, style 28 can reference style 18 or 20 but not style 32 or 34.

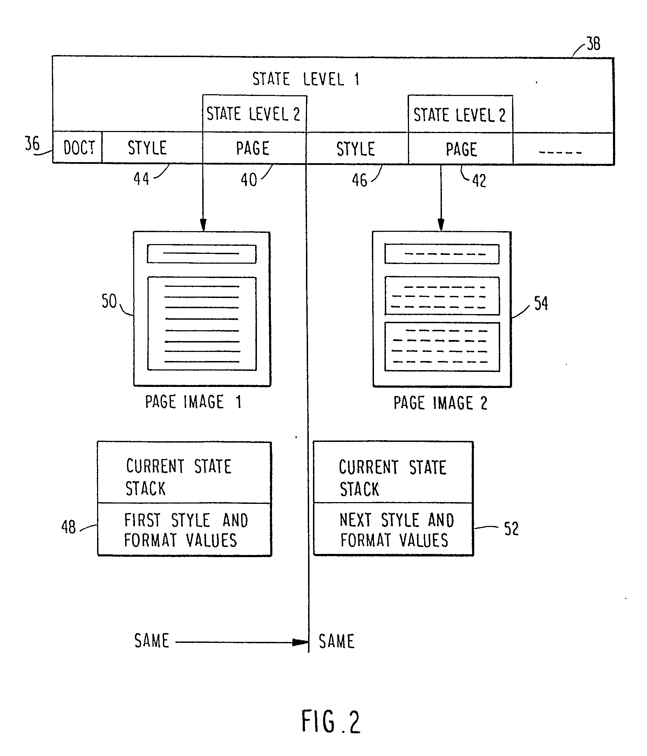

For a more detailed understanding of the present invention, reference is made to Figure 2. In Figure 2, a document is binary encoded in a data stream 36. The document is composed of one state, state 38, two pages, pages 40 and 42, and two styles, styles 44 and 46. The styles both appear in the same state 38. As the document is processed sequentially from left to right, values from style 44 are placed into current state stack 48 to specify the page layout and data formats for page image 50. When style 46 is processed, all current stack values are deleted from the current stack and the values from style 46 are placed into current state stack 52 to specify the page layout and data formats for page image 54.

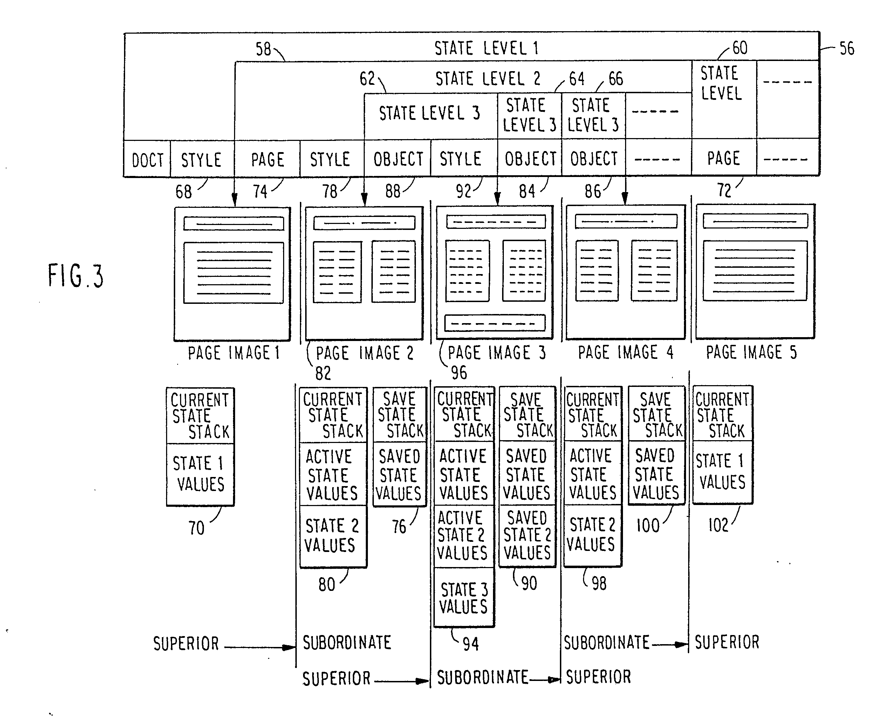

A document may contain multiple states, in which case, the states are nested and form a tree-like hierarchical structure with one root state called document state which may have any number of subordinate states called page states which, in turn, may have any number of subordinate states called object states. In Figure 3, a simple three level tree is represented with the root node 56 being level one, two subordinate nodes 58 and 60 at level two, and three subordinate nodes 62, 64 and 66 at level three. As the document is sequentially processed from left to right, state values are added to and removed from current state and save state stacks to specify the page layout and data formats for the pages and objects at the various state levels. When style 68 is processed, its state values are placed in current state stack 70 and used to specify the page layout and data format for any page and objects in that page that do not provide their own set of page layout and data formats which in Figure 3 is page 72. When a page provides its own set of page layout and data formats, for example page 74 in Figure 3, then unless otherwise specified matching value specifications are resolved in favor of the state values specified by the page. Matching document specified state values from style 68 are moved to save state stack 76 and the values from style 78 are placed in current state stack 80. The unmatched and page/object specific values from style 68 remain in current state stack 80 and together with the values from style 78 specify the page layout and data formats for page image 82 and any objects in page image 82 that do not provide their own set of page layout and data formats which in Figure 3 are objects 84 and 86. Style 68 may provide document state unique values which would be moved back and forth between the

4

current and saved state stacks as the state shifts back and forth between states 56 and 58 or 56 and 60. When an object provides its own set of page layout and data formats which in Figure 3 is object 88, then matching values and those values that are not valid in object state are moved to save state stack 90. Styles 68 and 78 may provide page state values which are not valid in object state. Such values would be moved back and forth between the current and saved state stacks as the state shifts back and forth between states 58 and 62, 58 and 64, and 58 and 66. The state values specified by style 92 are placed into current state stack 94 along with the remaining style 78 and 68 values to specify the layout of the data format for object 84 as shown in page image 96. When a subordinate state is terminated, the saved superior state values are moved from the save state to the current state stack. The examples of this in Figure 3 are at the location where the saved state two "saved state 2" values are moved from save state stack 90 to current state stack 98 and the location where saved state 1 values are moved from saved state stack 100 to current state stack 102.

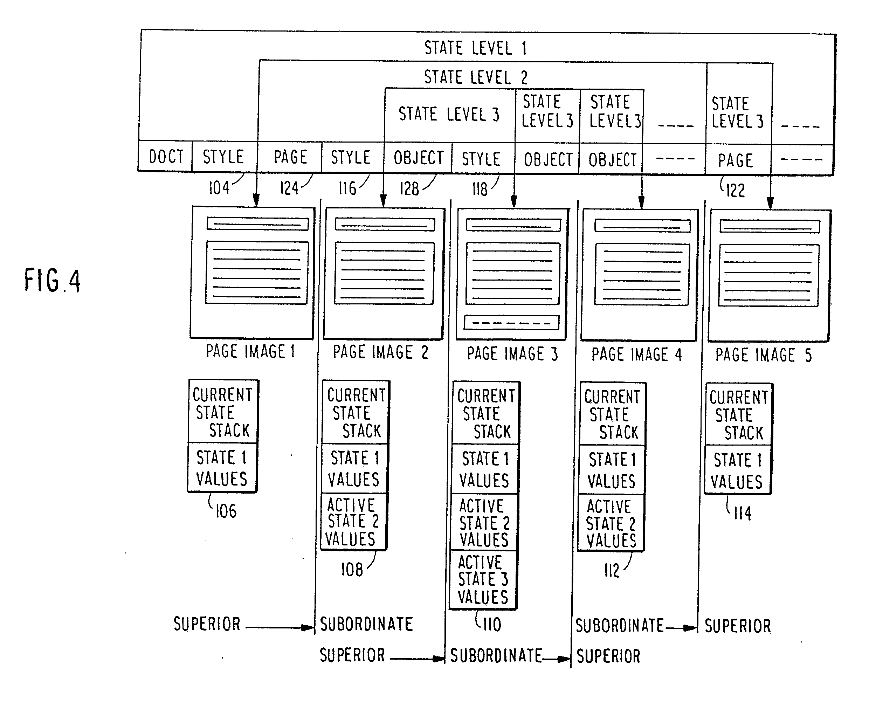

Figure 4 illustrates the setting of current state values when conflicts are resolved in favor of the current state. Style 104 values are placed in current state stack 106 and persist through current state stacks 108, 110, 112, and 114. Likewise, style unmatched 116 values are placed in current state stack 108 and persist through current state stacks 110 and 112. Unmatched style 118 values are placed in current state stack 110. Current state stack 106 values are used to provide the page layout and data format as shown in page image 120 when a page and one or more objects do not provide a style such as page 122. Since page 124 has style 116, current state stack 108 values are used top produce page image 126 for page 124 and all of its objects that do not provide their own style. Since object 128 has style 118, current state stack 110 values are used to produce page image 126 for object 128. If styles 104 and 124 specify values that do not apply to subordinate states, then such values would be saved in a save state stack and restored to the current state stack as described in the preceding paragraph and shown in Figure 3.

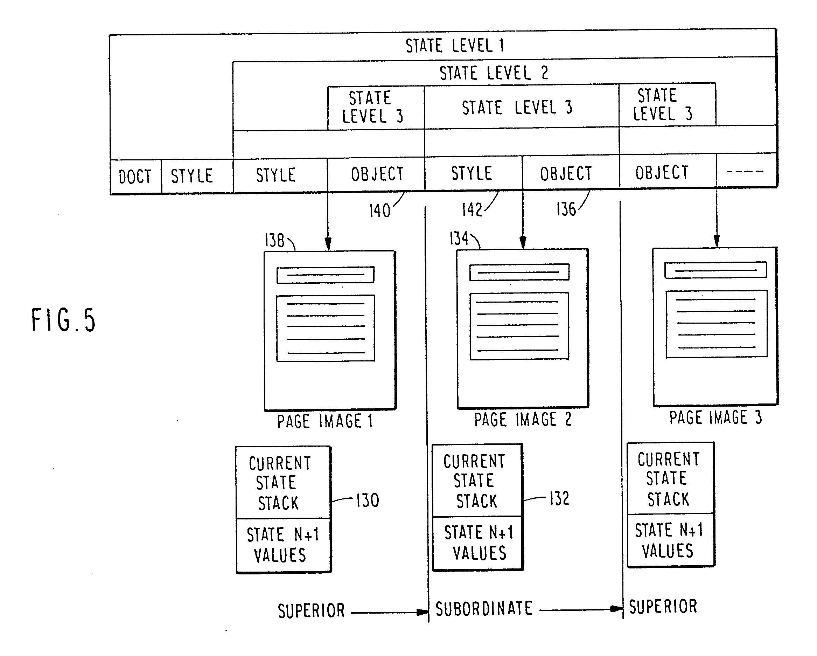

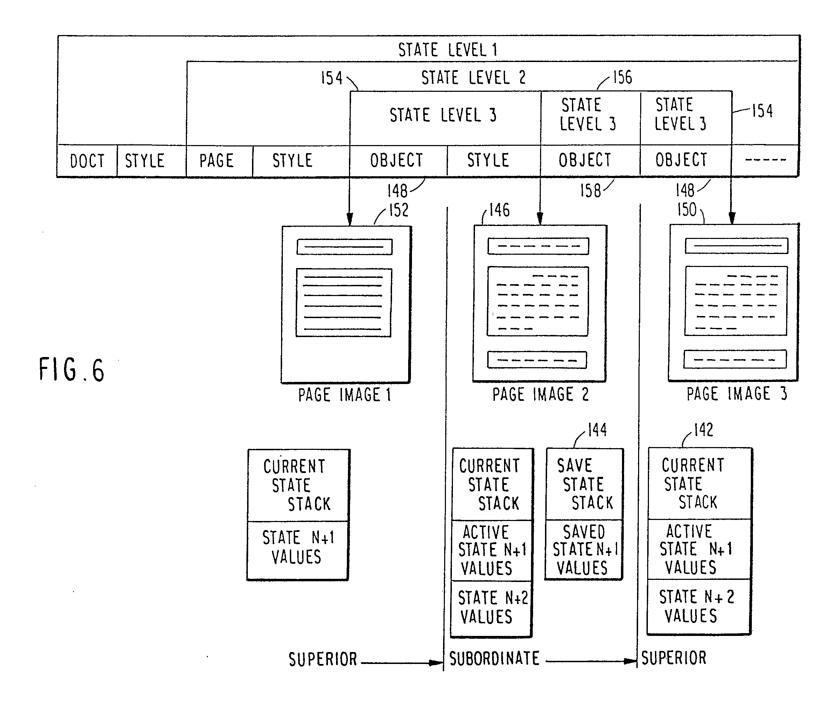

An object state can pass its current state values to another object state. In Figure 5, current state stack 130 values are passed to current state stack 132 and style 142 values are ignored. Therefore, page image 134 for object 136 is like page image 138 for and object 140. Saved state values are not returned to the current state and any previously saved values for a resumed suspended object state are discarded. Object states are suspended and resumed by nesting objects. Nesting of objects is not a topic for this disclosure and how it is done has no bearing on state value processing. In Figure 6, current state stack 142 is set equal to saved state stack 144 for suspended object state 154 now being resumed and the save stack from object state 156 is discarded. Therefore, page image 150 for resumed object 148 is like page image 146 for nested object 158 and not like page image 152 as it would have been if the current state stack values were discarded.

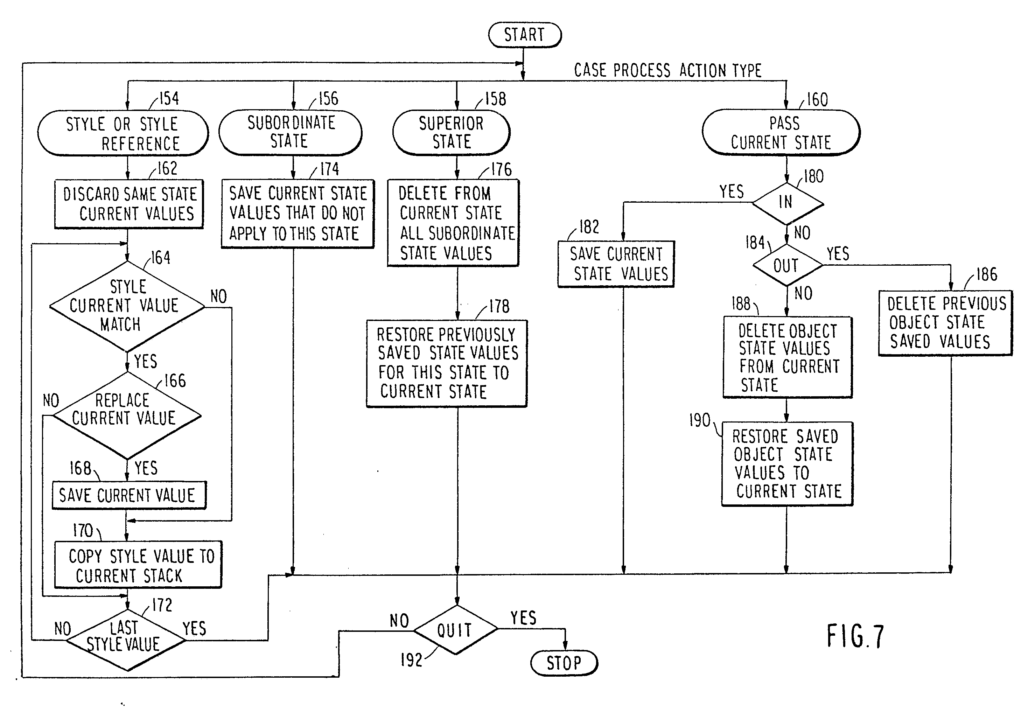

Referring now to Figure 7, there is shown a flow diagram of an implementation of the invention. The process starts by first determining the case of the process action type. These include style or style reference 154, subordinate state 156, superior state 158, and pass current state 160. Considering first the case of style or reference 154, the first operation is to discard the same state current values in function block 162. Then, in decision block 164, a test is made to determine whether the style value matches a current value. If so, a test is next made in decision block 166 to determine if the current value is to be replaced. If so, the current value is saved in function block 168, and the style value is copied to the current stack in function block 170. A test is then made in decision block 172 to determine if this is the last style value. If not, control returns to decision block 164 to process the next style value. If the test in decision block 164 is negative, that is the style does not match the current value, control goes to function block 170. If the test in decision block 166 is negative, that is the current value is not to be replaced, control goes to decision block 172.

For the case of subordinate state 156, the current state values that do not apply to this state are saved in function block 174, and that is the end of processing for this case.

For the case of superior state 158, all subordinate state values are deleted from the current state in function block 176, and then previously saved state values for this state are restored to the current state in function block 178. This concludes the processing for this case.

For the case of pass current state 160, a test is made in decision block 180 whether current state values are to be saved. If so, the current state values are saved in function block 182; otherwise, a test is made in decision block 184 to determine if saved values are to be deleted. If so, saved state values are deleted in function block 186; otherwise, object state values are deleted from the current state in function block 188, and the saved object state values are restored to the current state in function block 190.

At the completion of the processing for each state, a test is made in decision block 192 to determine if the process is to quit. If not, control loops back to one of the four cases 154, 156, 158 or 160. If so, the process stops.

The following pseudo code describes the logic of the program shown in the flow diagram :

```
REPEAT
(*Style or Style Reference*)
CALL DELETE_VALUES(State, Current_Stack_Ptr)
REPEAT
IF STYLE VALUE MATCHES CURRENT STATE VALUE, THEN
    IF REPLACE CURRENT STATE VALUE
        CALL SAVE_VALUE(Current_Stack_Ptr, Save_Stack_Ptr)
        CALL COPY_VALUE(Style_Ptr, Current_Stack_Ptr)
    ENDIF
    ELSE
        CALL COPY_VALUE(Style_Ptr, Current_Stack_Ptr)
ENDIF UNTIL ALL STYLE VALUES ARE PROCESSED
(*Subordinate State*)
CALL SAVE_VALUES(State, Current_Stack_Ptr)
(*Superior State*)
REPEAT CALL DELETE_VALUES(State, Current_Stack_Ptr)
UNTIL ALL SUBORDINATE STATES ARE PROCESSED
CALL MOVE_VALUES(State, Save_Stack_Ptr, Current_Stack_Ptr)
(*Pass current state*)
IF PASS IN, THEN
    CALL SAVE_VALUES(State, Current_Stack_Ptr, Save_Stack_Ptr)
    ELSE
        IF PASS OUT
            CALL DELETE_VALUES(State, Save_Stack_Ptr)
        ELSE
            CALL DELETE_VALUES(State, Current_Stack_Ptr)
            CALL MOVE_VALUES(State, Save_Stack_Ptr,
              Current_Stack_Ptr)
        ENDIF
    ENDIF
UNTIL SESSION COMPLETED
```

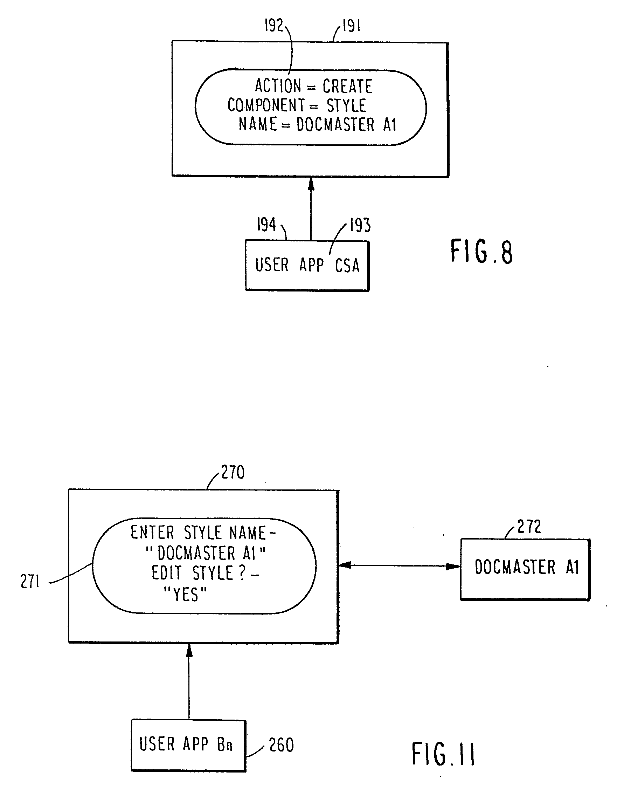

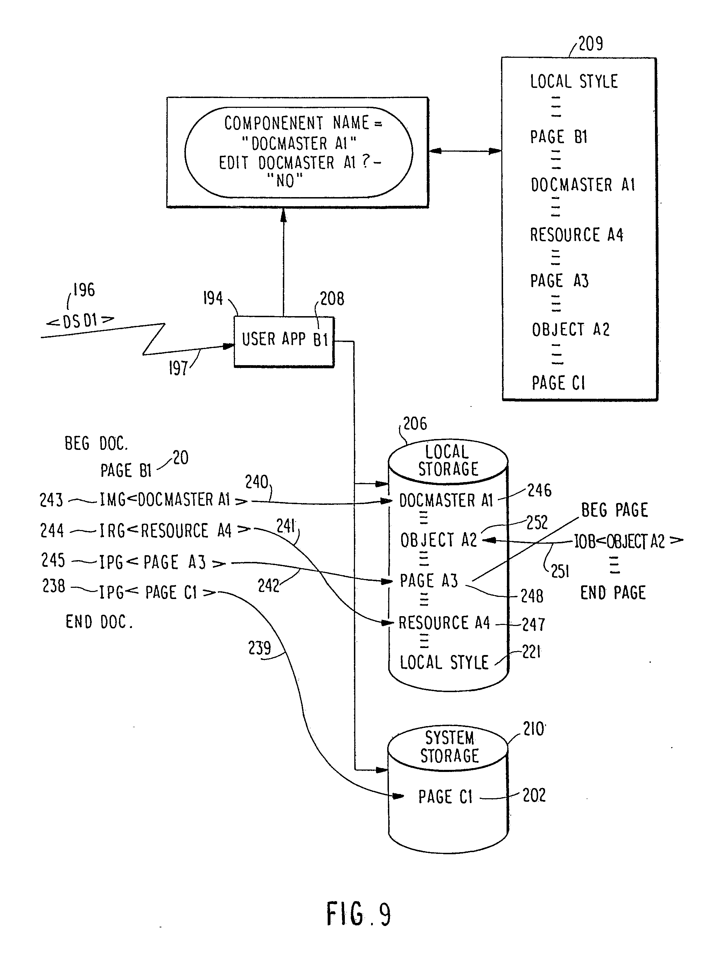

To further the reader's understanding of the invention, reference is next made to Figure 8 of the drawings. In this figure, there is illustrated a screen 191 on which is displayed a component processing menu 192. The menu is presented by application 193 that is running in device 194, such as a computer terminal or workstation, and which has been initiated by an operator of device 194. The application allows for processing of document components by providing functions such as create, modify, copy and others. The document components that can be processed include among others, logical descriptions, layout descriptions, pages, objects, and resources. Complete and partial documents can also be processed. In Figure 8, the operator has entered "Create" after the "Action =" prompt, "Style" after the "Component =" prompt, and "DocmasterA1" after the "Name =" prompt. Therefore, application 193 starts a shell for a style component named Docmaster by automatically generating Begin/End Style controls and displaying on screen 191 the style values that can be set for style "Docmaster". The style values that can be set are layout directives (e.g., page size, area size, area content) and data format directives (e.g., text margins relative to area boundaries, image clipping, line shear). Page values that can be set are page content (style, objects). Object values that can be set are data content (text, image, graphics) and data format controls (indent, initial position, orientation). Document values that can be set are content (style, page, resource). Resource values that can be set are data attribute definitions (character set, color, line type), generic logical document description (permitted logical elements such as chapter, sections and paragraphs, and permitted relationships between logical elements such as chapters can contain sections and/or paragraphs), generic layout document description (permitted layout elements such as medium, pages and areas, and permitted relationships between layout elements such as pages can contain areas), global variable descriptions (constants and variables with initialization and processing instructions), and macro definitions (document components or parts of document components which can be used several times throughout a document and which can be tailored for each usage through modification of identified variables). Upon termination, application 193 stores component "DocmasterA1", as specified by the operator. Reference is next made to Figure 9 which shows several components "DocmasterA1", "ObjectA2", "PageA3", and "ResourceA4" stored in local storage 206.

Figure 9 shows a data stream 196 on communication link 197 arriving at device 194. After notification of the arrival of data stream 196, the operator of device 194 initiates application 208 to process the data stream. Application 208 parses the data stream and retrieves referenced document components as needed from local storage 206 or system storage 210 into memory 209. As a component is retrieved, the operator is given the option to edit the component if customization is desired. In the illustrated example, customization is not desired, and the operator enters "No" in response to the "Edit component" prompt. No style has been specified for page 220; therefore, application 198 uses local default style 221. Data stream 196 contains Invoke Master Environment Group (IMG) 243, Invoke Resource Group (IRG) 244, and Include Page (IPG) 245 referencing controls which, when encountered by the data stream parsing processor, cause the reference links to styles, resources and pages to be resolved. Arrowed lines 240, 241 and 242 represent reference links created between IMG 243 and style 246, IRG 244 and resource group 247 and IPG 245 and page 248, respectively. The referenced components themselves may contain reference links to other components. Page 248 contains a reference link 251 to object 252. The components may reside in non-local storage facilities; for example, page 202 in system storage 210.

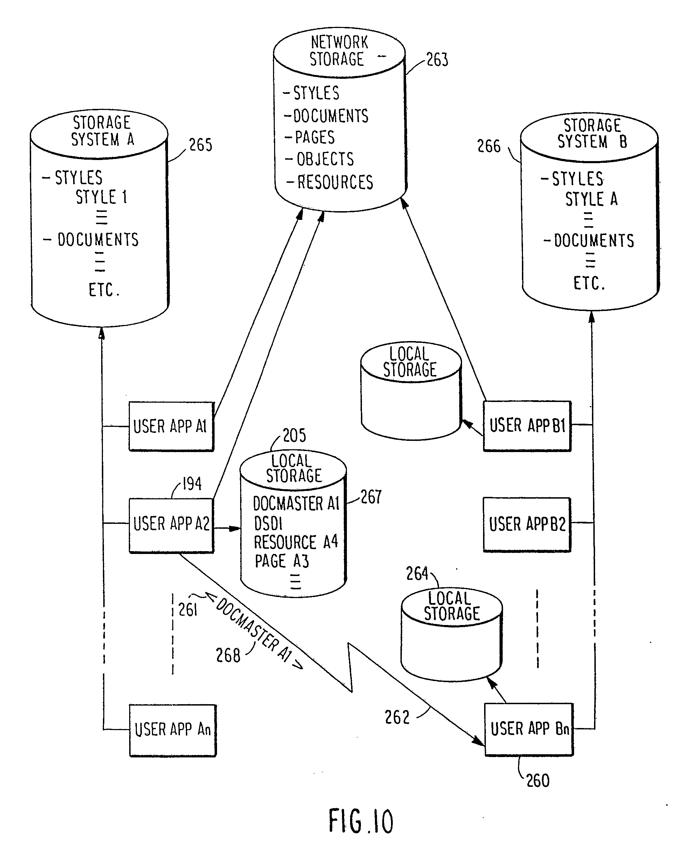

In Figure 10, style 268 is being sent from device 194 to device 260. Style 268 is a copy of style 267, which was created by application 193 in Figure 8. Device 194 is connected to local storage 205, system storage 265 and network storage 263. Device 260 is connected to local storage 264 and system storage 266. Communication link 262 supports the interchange of data between device 194 and device 260. Before placing style 268 on the communication link, a Begin Data Stream control is inserted before the Begin Master Environment Group control of style shell structure 268 in order to identify the start of the interchange data stream, and an End Data Stream control is inserted after the End Master Environment Group control to identify the end of the data stream. The resultant data stream is represented in Figure 10 by data stream 261, which is to be interpreted by device 260 in order to create a style to be stored in local storage 264.

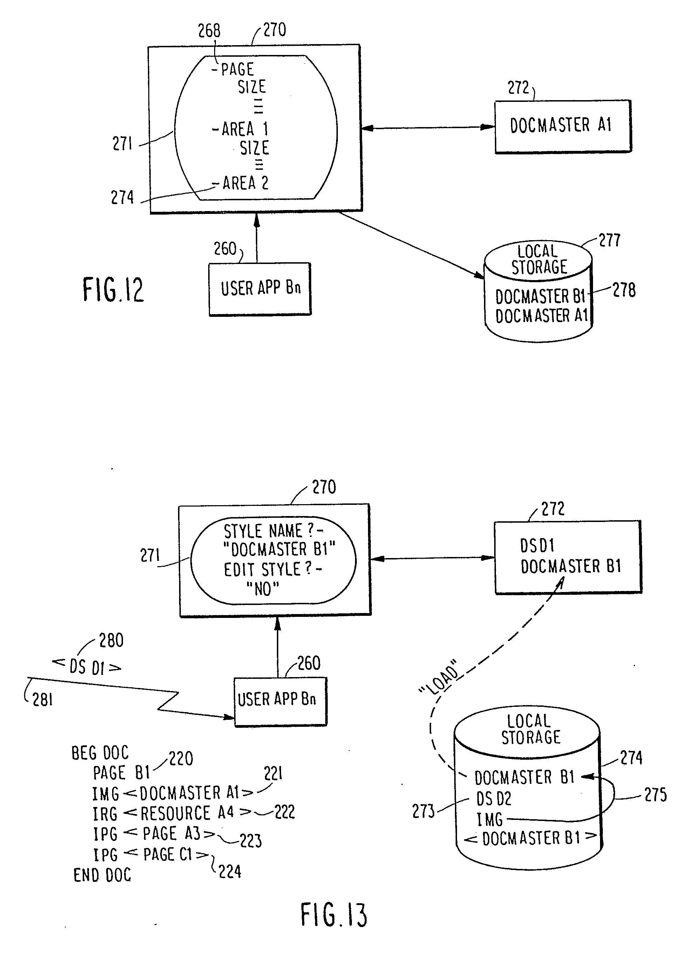

After arrival of the data stream at device 260 in Figure 11, the operator of that device decides that the style needs to be tailored and initiates an application 271 to edit the style. Application 271, displayed on screen 270, prompts the operator to enter the name of the style. The operator keys the name "DocmasterA1" in response to the prompt. DocmasterA1 is shown as being resident in memory 272. Since customization of the style is desired, the operator responds with a "yes" to the "Edit Style?" prompt, and application 271 displays the contents of style 268 on screen 270 as shown in Figure 12. The operator chooses to specify that area 274 be added to page 275. To achieve this result, the operator adds a new area definition, area 274, to style 268. The modified style is given a new name DocmasterB1 in response to the "New name?" prompt. "DocmasterB1" is then saved in local storage 277 (style 278).

Figure 13 shows a data stream 280 on communication link 281 arriving at device 260. The operator of device 260 asks that application 271 be displayed again on screen 270. Application 271 prompts the operator to enter the name of the style to be used in processing the data stream. The operator keys the name "DocmasterB1" in response to the prompt. DocmasterB1 is loaded into memory 272 at the request of application 271. Dotted line 282 shows DocmasterB1 being loaded into memory 272. As previously described, the operator is given the option to edit the style. Since the operator specified his formatting desires during the tailoring process shown in Figure 12, a "No" response is keyed for the "Edit Style?" prompt.

As in data stream 196 of Figure 9, data stream 280 contains page 220 which, when encountered, will be imaged according to DocmasterB1. The remaining components, style 221, resource 222 and pages 223 and 224, are not needed by the application 271; therefore, they have not been sent to application 271. If they are needed, they could have been substituted in data stream 280 in place of the IMG, IRG and IPG controls or they could be sent separately ahead of time or on demand to application 271 like Docmaster A1 was sent to application 260 in Figure 10.

Also, in Figure 13, data stream 273 references style 278 (DocmasterB1) using reference link 285 which points to style 278. Any number of data streams may share any number of components in common. The components can reside in the same storage as the data streams referencing those components or they may reside in different storage facilities.

There are several advantages to the invention. First, an application acting as a layout user agent can permit the user to create a new layout or modify and/or use an existing layout independent of the existence and content of data components and other layout components.

Second, an application acting as a data component user agent can permit the user to create a new data component or modify and/or use an existing data component independent of the existence and content of layout components.

Third, an application acting as a data component user agent can permit the user to create a new data component or modify and/or use an existing data component independent of the existence and content of other data components. This independence makes it easy to create a data component separate from any other data component and subsequent to its creation bring it and other data components together into the same layout component or set of layout components.

Fourth, data components for the same and different data types, e.g., text, image and graphics, can be mixed and matched in any combination together with the same layout component or set of layout components.

Finally, the access to and distribution of information can be limited to what is required to reduce access time and resource utilization. In particular, the independence of the components from each other and from the document definition offers many opportunities to reduce the number of bits that are sent over a network to electronically transport a document among geographically distributed nodes.

While the invention has been described in terms of a single preferred embodiment, those skilled in the art will recognize that the invention may be practiced with modification within the spirit and scope of the appended claims.

## Claims

1. A method of improving editing capabilities of a document composed on a computer system comprising the step of separately storing document layout and data components describing the document for independent retrieval and editing.

2. The method of improving editing capabilities as recited in claim 1 further comprising the step of creating a new layout for the document independent of the existence and content of data components.

3. The method of improving editing capabilities as recited in claim 1 further comprising the step of using an existing layout as the layout for the document independent of the existence and content of data components.

4. The method of improving editing capabilities as recited in claim 3 further comprising the step of modifying said existing layout before using it as the layout for the document.

5. The method of improving editing capabilities as recited in claim 1 further comprising the step of creating new data components for the document independent of the existence and content of layout components.

6. The method of improving editing capabilities as recited in claim 1 further comprising the step of using an existing data component as a data element in said document independent of the existence and content of layout components.

7. The method of improving editing capabilities as recited in claim 6 further comprising the step of modifying an existing data component before using the data component in said document.

8. The method of improving editing capabilities as recited in claim 1 wherein said document is a mixed data object document including text, table, graphic and/or image data objects further comprising the steps of:
creating new data components independent of the existence and content of other data components; and inserting said new data components and said other data components in a common layout component.

9. The method of improving editing capabilities as recited in claim 8 further comprising the step of mixing and matching any combination of the same and different data components with the same layout component.

8

LIBRARY ELEMENTS

ORGANIZATION OF LIBRARY ELEMENTS INTO A DOCUMENT

STATE LEVEL 1 : DOCUMENT

STATE LEVEL 2 : PAGE

STATE LEVEL 3 TO N : OBJECT

0 TO N EACH OF STYLES
AND OBJECTS IN ANY ORDER

0 OR 1 STYLE
FOLLOWED BY 0 TO N OBJECTS

0 TO N EACH OF STYLES AND
PAGES IN ANY ORDER

FIG.1

FIG.2

FIG.3

EP 0 332 557 A2

FIG.4

| STATE LEVEL 1 | | | | | | | | | | |
|---|---|---|---|---|---|---|---|---|---|---|
| | STATE LEVEL 2 | | | | | | | | STATE LEVEL 3 | |
| | | | | STATE LEVEL 3 | | STATE LEVEL 3 | STATE LEVEL 3 | ---- | | ---- |
| DOCT | STYLE | PAGE | STYLE | OBJECT | STYLE | OBJECT | OBJECT | ---- | PAGE | ---- |

104  124  116  128  118  122

PAGE IMAGE 1    PAGE IMAGE 2    PAGE IMAGE 3    PAGE IMAGE 4    PAGE IMAGE 5

| CURRENT STATE STACK | CURRENT STATE STACK | CURRENT STATE STACK | CURRENT STATE STACK | CURRENT STATE STACK |
|---|---|---|---|---|
| STATE 1 VALUES | STATE 1 VALUES | STATE 1 VALUES | STATE 1 VALUES | STATE 1 VALUES |
| | ACTIVE STATE 2 VALUES | ACTIVE STATE 2 VALUES | ACTIVE STATE 2 VALUES | |
| | | ACTIVE STATE 3 VALUES | | |

106          108          110          112          114

SUPERIOR ──→ SUBORDINATE

SUPERIOR ──→ SUBORDINATE──→ SUPERIOR

SUBORDINATE──→ SUPERIOR

EP 0 332 557 A2

FIG.5

| STATE LEVEL 1 | | | | | | | |
|---|---|---|---|---|---|---|---|
| | STATE LEVEL 2 | | | | | | |
| | | STATE LEVEL 3 | | STATE LEVEL 3 | | STATE LEVEL 3 | |
| | | | | | | | |
| DOCT | STYLE | STYLE | OBJECT | STYLE | OBJECT | OBJECT | ---- |

140    142    136

138    134

PAGE IMAGE 1    PAGE IMAGE 2    PAGE IMAGE 3

| CURRENT STATE STACK | –130 |
|---|---|
| STATE N+1 VALUES | |

| CURRENT STATE STACK | –132 |
|---|---|
| STATE N+1 VALUES | |

| CURRENT STATE STACK | |
|---|---|
| STATE N+1 VALUES | |

SUPERIOR ——————▶ SUBORDINATE ——————▶ SUPERIOR

EP 0 332 557 A2

| STATE LEVEL 1 | | | | | | | | |
|---|---|---|---|---|---|---|---|---|
| | | | STATE LEVEL 2 154 156 | | | | | 154 |
| | | | | STATE LEVEL 3 | | STATE LEVEL 3 | STATE LEVEL 3 | |
| DOCT | STYLE | PAGE | STYLE | OBJECT | STYLE | OBJECT | OBJECT | ----- |

FIG.6

PAGE IMAGE 1

PAGE IMAGE 2

PAGE IMAGE 3

| CURRENT STATE STACK |
|---|
| STATE N+1 VALUES |

| CURRENT STATE STACK |
|---|
| ACTIVE STATE N+1 VALUES |
| STATE N+2 VALUES |

| SAVE STATE STACK |
|---|
| SAVED STATE N+1 VALUES |

| CURRENT STATE STACK |
|---|
| ACTIVE STATE N+1 VALUES |
| STATE N+2 VALUES |

SUPERIOR ⟶ SUBORDINATE ⟶ SUPERIOR

FIG.7

START

CASE PROCESS ACTION TYPE

154 — STYLE OR STYLE REFERENCE

156 — SUBORDINATE STATE

158 — SUPERIOR STATE

160 — PASS CURRENT STATE

162 — DISCARD SAME STATE CURRENT VALUES

174 — SAVE CURRENT STATE VALUES THAT DO NOT APPLY TO THIS STATE

176 — DELETE FROM CURRENT STATE ALL SUBORDINATE STATE VALUES

180 — IN

164 — STYLE CURRENT VALUE MATCH — NO

YES

166 — REPLACE CURRENT VALUE — NO

YES

168 — SAVE CURRENT VALUE

170 — COPY STYLE VALUE TO CURRENT STACK

172 — LAST STYLE VALUE — NO / YES

178 — RESTORE PREVIOUSLY SAVED STATE VALUES FOR THIS STATE TO CURRENT STATE

182 — SAVE CURRENT STATE VALUES

184 — OUT — YES / NO

186 — DELETE PREVIOUS OBJECT STATE SAVED VALUES

188 — DELETE OBJECT STATE VALUES FROM CURRENT STATE

190 — RESTORE SAVED OBJECT STATE VALUES TO CURRENT STATE

192 — QUIT — NO / YES

STOP

EP 0 332 557 A2

ACTION = CREATE
COMPONENT = STYLE
NAME = DOCMASTER A1

USER APP CSA

FIG.8

ENTER STYLE NAME –
"DOCMASTER A1"
EDIT STYLE ? –
"YES"

DOCMASTER A1

USER APP Bn

FIG.11

209

LOCAL STYLE
≡
PAGE B1
≡
DOCMASTER A1
≡
RESOURCE A4
≡
PAGE A3
≡
OBJECT A2
≡
PAGE C1

196
<DS D1>

194    208

USER APP B1

197

COMPONENENT NAME =
"DOCMASTER A1"
EDIT DOCMASTER A1 ?–
"NO"

BEG DOC.
   PAGE B1 —20

243 —— IMG<DOCMASTER A1>    240

244 —— IRG<RESOURCE A4>    241

245 —— IPG< PAGE A3 >

238 —— IPG< PAGE C1 >    242

END DOC.

239

206
LOCAL
STORAGE

DOCMASTER A1 —246
≡
OBJECT A2 —252
≡
PAGE A3
≡
RESOURCE A4 —247
≡
LOCAL STYLE —221
—248

BEG PAGE

IOB<OBJECT A2 >
251
≡
END PAGE

210
SYSTEM
STORAGE

PAGE C1 —202

FIG.9

NETWORK
STORAGE — 263

- STYLES
- DOCUMENTS
- PAGES
- OBJECTS
- RESOURCES

STORAGE
SYSTEM A 265

- STYLES
  STYLE 1
  ≡
- DOCUMENTS
  ≡
  ETC.

STORAGE
SYSTEM B
266

- STYLES
  STYLE A
  ≡
- DOCUMENTS
  ≡
  ETC.

LOCAL
STORAGE

USER APP A1

205
LOCAL
STORAGE

DOCMASTER A1 267
DSD1
RESOURCE A4
PAGE A3
≡

194
USER APP A2

USER APP B1

USER APP B2

261
268 DOCMASTER A1

264
LOCAL
STORAGE

262

USER APP An

USER APP Bn
260

FIG.10

FIG.12

- PAGE
    SIZE
    =
- AREA 1
    SIZE
    =
- AREA 2

268  270

271

274

260

USER APP Bn

272

DOCMASTER A1

LOCAL STORAGE

DOCMASTER B1
DOCMASTER A1

277

278

FIG.13

270

STYLE NAME ? -
"DOCMASTER B1"
EDIT STYLE ? -
"NO"

271

280

< DS D1 >

281

260

USER APP Bn

BEG DOC
    PAGE B1
    IMG < DOCMASTER A1 >
    IRG < RESOURCE A4 >
    IPG < PAGE A3 >
    IPG < PAGE C1 >
END DOC

220
221
222
223
224

272

DSD1
DOCMASTER B1

"LOAD"

LOCAL STORAGE

DOCMASTER B1
DS D2
IMG
< DOCMASTER B1 >

273

274

275